# FASCICULE DE BREVET EUROPEEN

(11) **EP 3 377 254 B1**
(45) Date de publication et mention de la délivrance du brevet: **21.07.2021**
(21) Numéro de dépôt: 16809136.1
(22) Date de dépôt: 10.11.2016
(51) Int. Cl.: B22F 5/04, B22F 5/00, B29C 64/153, B33Y 10/00, B33Y 80/00, F01D 5/14, F01D 9/04, B22F 10/00, B22F 10/20, B22F 10/40, B22F 3/24, B23K 101/00, B23P 15/04

(54) **PROCEDE DE FABRICATION D'UNE PREFORME D'AUBE, D'UNE AUBE ET D'UN SECTEUR DE DISTRIBUTEUR PAR FUSION SELECTIVE SUR LIT DE POUDRE**
VERFAHREN ZUR HERSTELLUNG EINER SCHAUFELVORFORM, EINER SCHAUFEL UND EINES DÜSENSEGMENTS DURCH SELEKTIVE PULVERBETTFUSION
METHOD FOR MANUFACTURING A BLADE PREFORM, A BLADE AND A NOZZLE SEGMENT BY SELECTIVE POWDER-BED FUSION

(30) Priorité: 17.11.2015 FR 1561021
(43) Date de publication de la demande: 26.09.2018
(73) Titulaire: Safran Aircraft Engines, 75015 Paris (FR)
(72) Inventeur: DREANO, Sébastien, 77550 Moissy-Cramayel Cedex (FR)
(74) Mandataire: Cabinet Beau de Loménie
(86) Numéro de dépôt international: PCT/FR2016/052928
(87) Numéro de publication internationale: WO 2017/085383

(56) Documents cités:
- WO-A1-2014/124969
- WO-A1-2015/088852
- US-A1- 2009 072 447
- US-A1- 2013 112 366
- US-A1- 2014 271 221
- US-A1- 2015 314 534

## Description

### Arrière-plan de l'invention

La présente invention se rapporte au domaine général des procédés de fabrication additive. La présente invention concerne plus particulièrement un procédé de fabrication d'aubes pour turbomachine par fusion sélective sur lit de poudre.

Il est aujourd'hui courant et avantageux d'avoir recours à des techniques de fabrication additive pour réaliser facilement et rapidement des pièces tridimensionnelles complexes. Le domaine aéronautique se prête particulièrement bien à l'utilisation de ce type de procédés.

Lorsqu'il s'agit de la fabrication de pièces en métal ou en alliage métallique, comme divulgué dans les documents US 2014/271221 A1, WO 2015/088852 A1, US 2009/072447 A1, US 2013/112366 A1, US 2015/314534 A1 et WO 2014/124969 A1, le procédé de fusion sélective sur lit de poudre permet d'obtenir des pièces complexes qui sont difficilement réalisables ou non réalisables avec les procédés conventionnels tels que la fonderie, la forge ou l'usinage.

Un tel procédé comprend typiquement une étape durant laquelle on dépose une couche de poudre sur un plateau de fabrication, puis une étape de fusion sélective d'une partie de la couche de poudre déposée à l'aide d'un organe de chauffage. Les étapes précédentes sont répétées successivement pour former, couche après couche, la pièce finale.

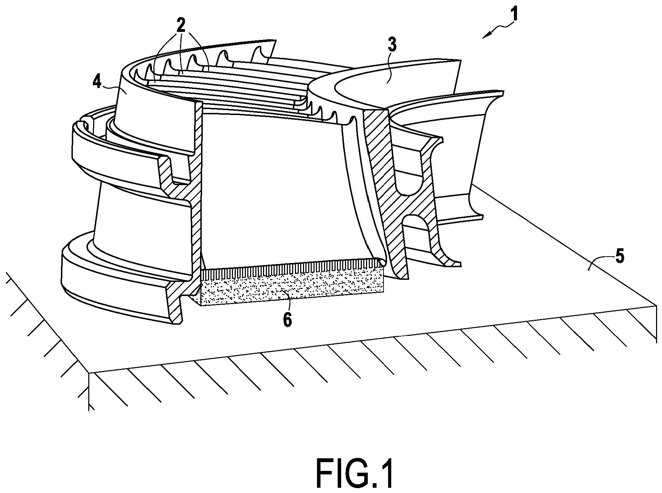

La figure 1 montre un secteur de distributeur 1 de turbine pour turbomachine aéronautique comprenant une pluralité d'aubes 2 fixes s'étendant entre deux anneaux concentriques 3 et 4, disposé sur un plateau de fabrication 5 horizontal. Lorsque le distributeur est dans une telle configuration, les aubes 2 sont « suspendues » ou en porte-à-faux par rapport aux anneaux 3 et 4.

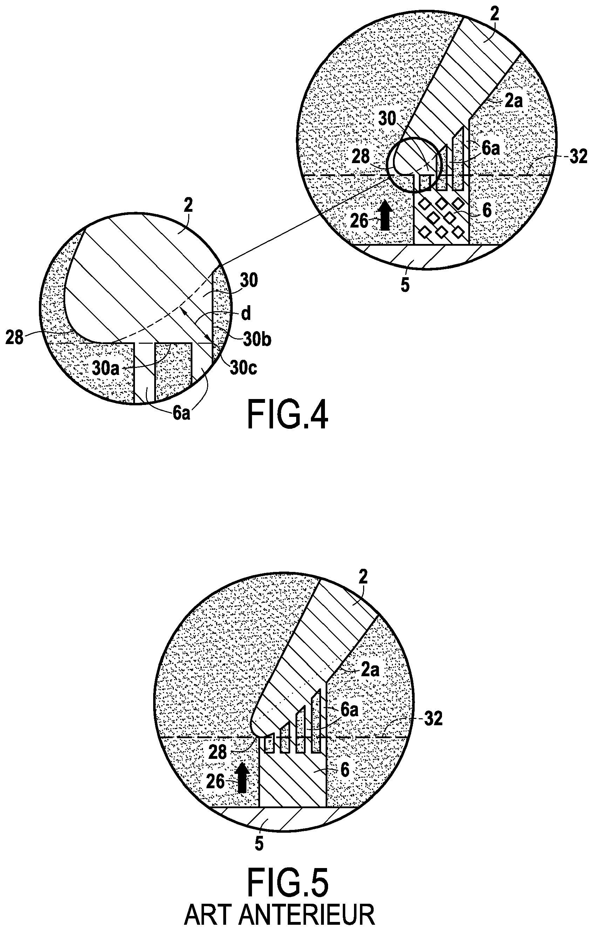

Lorsque l'on souhaite fabriquer un tel secteur de distributeur 1 par fusion sélective sur lit de poudre, il est nécessaire de prévoir lors de la fabrication des supports amovibles ou sécables 6 (voir figure 1) qui maintiennent les aubes pendant leur fabrication. En effet, dans les procédés de fusion sélective sur lit de poudre, il faut obligatoirement que chaque couche fusionnée puisse être soutenue par de la matière déjà fusionnée précédemment. De tels supports 6 sont inévitablement présents au niveau du bord d'attaque ou du bord de fuite (selon si le secteur de distributeur est fabriqué dans un sens ou dans l'autre) des aubes 2, et sur une partie de la face 2a des aubes en regard du plateau de fabrication 5 (voir figure 5).

Cependant, la présence de ces supports amovibles au niveau du bord d'attaque ou du bord de fuite n'est pas souhaitable. En effet, une fois le secteur de distributeur fabriqué dans l'outillage de fusion sélective sur lit de poudre, et séparé de son plateau de fabrication, les supports amovibles doivent être retirés. Une étape de polissage manuel est nécessaire pour éliminer les résidus de ces supports. Lors de l'étape de polissage manuel, l'opérateur est amené à déplacer l'outil de polissage sur le bord sur lequel les supports sont présents (correspondant au bord d'attaque ou de fuite de l'aube) et à s'appuyer dessus. Le polissage manuel peut ainsi occasionner des défauts de forme et des irrégularités sur le bord concerné à cause d'un enlèvement de matière excessif. De tels défauts peuvent s'avérer problématiques pour l'aérodynamique des aubes lors de leur utilisation ultérieure dans une turbomachine.

### Objet et résumé de l'invention

La présente invention a donc pour but principal de pallier de tels inconvénients en proposant un procédé de fabrication par fusion sélective sur lit de poudre d'une préforme d'aube pour turbomachine selon la revendication 1 de l'ensemble de revendications ci-après.

Conformément à l'invention, la face formant intrados ou extrados de l'aube en regard du plateau de fabrication comporte un méplat s'étendant à partir de ladite face, le méplat étant présent sur une portion de ladite face située en dehors du premier bord de l'aube, le support amovible étant fixé sur le méplat ou à la fois sur le méplat et sur une portion de ladite face située en dehors du premier bord.

Le procédé selon l'invention est remarquable par l'intégration lors de la fabrication de la préforme d'aube d'un méplat au niveau du premier bord de l'aube (le premier bord pouvant correspondre à un bord d'attaque ou à un bord de fuite selon l'orientation de l'aube dans l'outillage de fusion sélective sur lit de poudre). La présence de ce méplat permet avantageusement d'éloigner la portion de l'aube sur laquelle le support amovible est rattaché du premier bord considéré. En d'autres termes, le support amovible est positionné en retrait par rapport au premier bord de l'aube. Lorsque le support amovible est ultérieurement retiré pour obtenir l'aube, les résidus de support sont localisés sur le méplat et éventuellement sur une partie de la face de l'aube en regard du plateau de fabrication, mais pas directement sur le premier bord. Ainsi, lors du polissage de l'aube pour retirer ces résidus, l'opérateur peut s'appuyer non plus sur le premier bord de l'aube, mais sur le méplat et la face de l'aube au voisinage de laquelle le méplat est présent. Une telle disposition permet donc de limiter l'apparition de défauts dus au retrait des supports en assurant un polissage homogène et contrôlé de l'aube. En outre, le temps d'ajustement ou de polissage de l'aube est réduit par une telle technique, en rendant cette étape plus systématique. Bien entendu, d'autres techniques que le polissage peuvent être utilisées pour ajuster la forme de l'aube après le retrait des supports.

De préférence, le méplat comprend une première face parallèle au plateau de fabrication et tangente au premier bord de l'aube. Par exemple, la première face peut former un angle inférieur ou égal à 5° avec le plateau de fabrication. Comme la pièce est fabriquée couche par couche, chaque couche étant parallèle au plateau de fabrication, cela signifie que la première couche formant l'aube sera une surface, par exemple rectangulaire. Il est avantageux que la première couche soit une surface plutôt qu'une ligne, pour assurer un meilleur maintien et de l'aube, notamment au niveau de son premier bord.

De préférence également, le méplat comprend en outre une deuxième face perpendiculaire à la première face. Par exemple, la deuxième face peut former un angle compris entre 85° et 95° avec la première face. Dans ce cas, un point du méplat à l'intersection des première et deuxième faces dudit méplat peut se situer à une distance de la face de l'aube en regard du plateau de fabrication inférieure ou égale à 0,5 mm, par exemple inférieure ou égale à 0,3 mm. De manière plus générale, le méplat peut être intégré à l'aube de sorte qu'il ne dépasse pas le défaut de forme admissible de l'aube (dicté par un cahier des charges par exemple) ou, en d'autre termes, pour rentrer dans les exigences de forme de l'aube. Ainsi, lorsque le méplat est construit de la sorte, ses dimensions sont inférieures au défaut de forme admissible pour l'aube, et son retrait ultérieur, par exemple par usinage, peut devenir facultatif.

Le support amovible peut être un support alvéolaire.

L'invention vise également un procédé de fabrication d'une aube pour turbomachine, comprenant les étapes suivantes :
- la fabrication d'une préforme d'aube par un procédé tel que celui présenté plus haut, et
- le retrait du support amovible et du méplat de la préforme d'aube.

De préférence, le retrait du support amovible et du méplat comprend le polissage de l'aube.

L'invention vise encore un procédé de fabrication d'un secteur de distributeur de turbomachine par fusion sélective sur lit de poudre, le secteur de distributeur comprenant une pluralité d'aubes fixes portées par deux secteurs d'anneau, les aubes fixes étant fabriquées par un procédé de fabrication d'une aube tel que celui décrit plus haut.

L'invention vise enfin une préforme d'aube de turbomachine comprenant une aube et au moins un support amovible fixé sur l'aube, une des faces de l'aube formant intrados ou extrados comprenant un méplat s'étendant à partir de ladite face, le méplat étant présent sur une portion de ladite face située en dehors d'un premier bord de l'aube correspondant à un bord d'attaque ou à un bord de fuite de l'aube, le support amovible étant fixé sur le méplat ou à la fois sur le méplat et sur une portion de ladite face située en dehors du premier bord.

De préférence, le méplat comprend une première face tangente au premier bord de l'aube et une deuxième face sensiblement perpendiculaire à la première face.

### Brève description des dessins

D'autres caractéristiques et avantages de la présente invention ressortiront de la description faite ci-dessous, en référence aux dessins annexés. Sur les figures :
- la figure 1 est une vue en perspective d'un secteur de distributeur pouvant être fabriqué par un procédé selon l'invention,
- la figure 2 est un ordinogramme représentant les principales étapes d'un procédé de fabrication d'une aube selon l'invention,
- la figure 3 est une vue schématique en coupe d'un outillage de fusion sélective sur lit de poudre dans lequel on fabrique un secteur de distributeur,
- la figure 4 est une vue détaillée de la figure 3 au niveau du premier bord d'une aube et de son support amovible, et
- la figure 5 est une vue similaire à celle de la figure 3 illustrant un procédé de l'art antérieur.

### Description détaillée de l'invention

La figure 1 montre un secteur distributeur 1 ou de redresseur de turbine pour turbomachine aéronautique, qui a déjà été brièvement décrit. Un tel secteur de distributeur 1 peut être fabriqué par un procédé selon l'invention par fusion sélective sur lit de poudre. Une étape du procédé de fabrication comporte la fabrication des aubes 2 du secteur de distributeur 1. On notera que l'invention s'applique indifféremment aux aubes pour turbomachines terrestres ou aéronautiques.

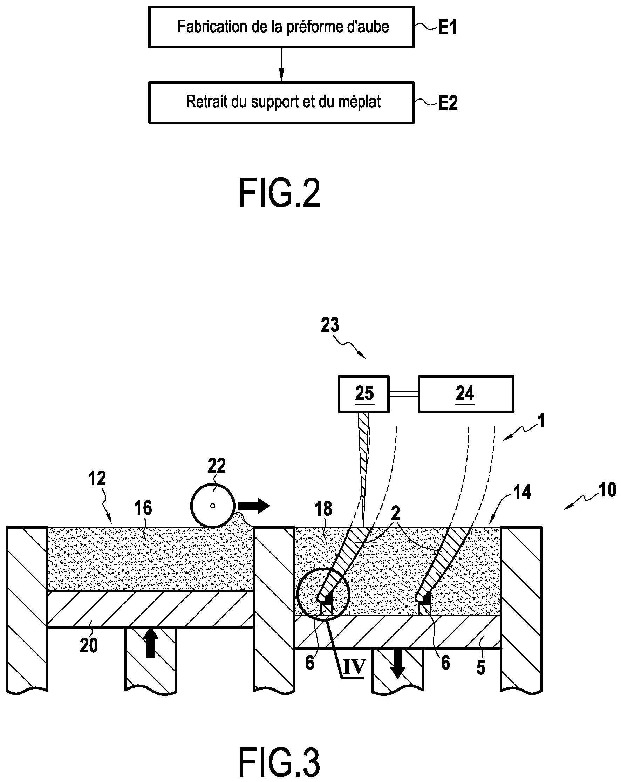

Un procédé de fabrication d'une aube 2 selon l'invention va maintenant être décrit en référence à l'ordinogramme de la figure 2 et à l'outillage de fusion sélective illustré sur les figures 3 et 4. Un tel procédé comprend d'abord la fabrication d'une préforme d'aube (étape E1), puis le retrait (étape E2) du support amovible 6 de la préforme pour obtenir l'aube. Le support 6 est ainsi dit « amovible » car il est destiné à être retiré de l'aube 2 après sa fabrication par un procédé selon l'invention.

La figure 3 montre un outillage 10 de fusion sélective sur lit de poudre pouvant être utilisé pour fabriquer un secteur de distributeur 1 muni d'une pluralité d'aubes fixes 2. Pour des raisons de simplification, on a représenté l'outillage 10 en coupe au cours de la fabrication d'un secteur de distributeur 1 comprenant seulement deux aubes 2.

De façon connue en soi, l'outillage 10 comprend un réservoir de poudre 12 et une zone de fabrication 14 dans laquelle est fabriqué le secteur de distributeur 1. Le réservoir de poudre 12 contient la poudre 16 métallique ou d'un alliage métallique qui servira à fabriquer le secteur de distributeur 1, tandis que la zone 14 est apte à contenir le secteur de distributeur 1 une fois fabriqué ainsi que de la poudre non fusionnée 18.

Au fond du réservoir de poudre 12 se trouve un plateau 20 apte à se déplacer verticalement pour apporter de la poudre devant un racleur ou rouleau 22 qui peut ensuite pousser la poudre vers la zone de fabrication 14 de façon à former une couche de poudre. Au fond de la zone de fabrication 14 se trouve un plateau de fabrication 5 apte à se déplacer verticalement au fur et à mesure de la fabrication du secteur de distributeur 1. Le racleur ou rouleau 22, constituant un moyen d'étalement de poudre, permet de déposer une couche de poudre sur le plateau de fabrication 5.

L'outillage 10 comprend enfin un organe de chauffage 23 muni d'une portion de génération 24 d'un faisceau laser ou d'un faisceau d'électrons et d'une portion 25 permettant de contrôler la trajectoire du faisceau généré, afin de fusionner sélectivement une couche de poudre déposée dans la zone de fabrication 14.

Pour chaque aube 2, on prévoit la fabrication d'un support amovible 6 fixé sur le plateau de fabrication 5 d'une part, et sur l'aube 2 d'autre part, qui permet de maintenir l'aube 2 tout au long du procédé de fabrication. On va ainsi fabriquer une préforme d'aube qui comprend une aube 2 et son support amovible 6.

La figure 4 montre une vue schématique agrandie d'une préforme d'aube dans la zone de fabrication 14 au niveau du support amovible 6. La préforme d'aube est ici fabriquée dans la direction indiquée par la flèche 26. La fabrication de la préforme d'aube commence par le support 6, puis on fabrique l'aube 2 en commençant à partir d'un premier bord 28 (correspondant ici au bord de fuite de l'aube) et jusqu'à un deuxième bord (correspondant ici au bord d'attaque de l'aube, non représenté). Ainsi, comme cela est visible sur les figures, le premier bord 28 est situé en regard du plateau de fabrication 5, alors que le deuxième bord est situé à l'opposé dudit plateau de fabrication 5. En outre, le premier 28 et le deuxième bords sont généralement parallèles à la surface supérieure du plateau de fabrication.

Conformément à l'invention, un méplat 30 est aménagé sur l'aube 2, plus précisément sur une face 2a de l'aube, et au niveau du premier bord 28 de l'aube. Ce méplat 30 s'étend depuis un voisinage du premier bord 28 et en direction opposée au premier bord 28, du côté de la face 2a de l'aube en regard du plateau de fabrication 5 (cette face correspond ici à l'extrados de l'aube). Dans l'exemple illustré le méplat 30 comprend une première face 30a sensiblement parallèle au plateau de fabrication 5 et tangente au premier bord 28 de l'aube, et une deuxième face 30b sensiblement perpendiculaire à la première face 30a. Dans cette configuration, un point 30c situé à l'intersection des deux faces se trouve à une distance d de la face 2a de l'aube. De préférence, cette distance d est inférieure ou égale à 0,5 mm, voire inférieure ou égale à 0,3 mm, pour respecter le défaut de forme admissible pour l'aube 2. De manière générale, la distance d peut être choisie inférieure ou égale à la valeur du défaut de forme admissible pour l'aube 2, le défaut de forme étant généralement défini par un cahier des charges.

Le support amovible 6 comprend ici une pluralité de murets 6a (ou pattes) qui sont destinés à soutenir l'aube 2. Ces murets 6a sont fixés sur une portion de l'aube 2 s'étendant depuis le méplat 30 jusque sur la face 2a de l'aube et dans une direction opposée au premier bord 28. Les murets 6a peuvent être fixés sur le méplat et en retrait du premier bord 28 de l'aube, c'est-à-dire que les murets 6a ne sont pas positionnés au niveau du premier bord de l'aube et sont éloignés de celui-ci. Dans un mode de réalisation non illustré, les murets 6a peuvent être fixés sur une portion s'étendant depuis le milieu de la face 30a du méplat 30, et jusque sur la face 2a de l'aube.

On notera que le support 6, le méplat 30 et l'aube 2 ne forment qu'une seule et même pièce (que l'on appelle ici la préforme d'aube) à l'issue de l'étape E1.

Le support amovible 6 est de préférence du type alvéolaire. De manière générale, le support amovible 6 peut ne pas être plein, et par exemple être creux. Ainsi, on évite de consommer trop de matière pendant le procédé de fabrication, car le support 6 sera finalement retiré de la préforme d'aube.

La ligne 32 en pointillés sur la figure 4 représente la première couche qui constitue l'aube, on voit que la partie fusionnée de cette première couche qui entame la fabrication de l'aube 2 forme un plan grâce à la présence du méplat 30. L'obtention d'une première couche d'aube constituée par un plan est avantageuse. En effet, en fabrication additive, on évite tant que possible de commencer une pièce par la fusion d'une simple ligne pour minimiser les défauts de fabrication. De plus, en entamant la fabrication de l'aube 2 par un plan, elle sera mieux maintenue par le support 6.

Une fois que la préforme d'aube a été fabriquée (ou la pluralité de préformes d'aubes d'un distributeur ou d'un redresseur), le support amovible 6 peut être retiré par découpe au niveau des murets 6a (étape E2). Les résidus de murets 6a du support 6 restants et le méplat 30 sont ensuite éliminés, par exemple avec un outil de polissage du type meuleuse. La présence du méplat 30 permet de ne pas appuyer l'outil de polissage sur le premier bord 28 durant cette étape. En effet, on pourra plutôt positionner l'outil de polissage sur le méplat 30 et au niveau de la face 2a, afin de ne pas abîmer le premier bord 28. De plus, il s'avère plus aisé de prendre appui avec l'outil de polissage sur la face 2a, plutôt que sur le premier bord 28. La présence du méplat permet donc d'obtenir des aubes dont les premiers bords 28 sont réguliers et ne présentent pas de défauts au-delà du défaut admissible défini par un cahier des charges.

On notera que l'on ne sort pas du cadre de l'invention lorsque plusieurs supports 6 sont utilisés pour soutenir une aube 2.

A titre de comparaison, le positionnement d'un support amovible 6 tel qu'il peut être réalisé dans l'art antérieur est illustré sur la figure 5. Dans cette configuration au moins un muret 6a du support 6 est positionné sur le premier bord 28 pour pouvoir maintenir l'aube correctement pendant sa fabrication. En outre, la première couche formant l'aube 2 (matérialisée par la ligne 32 en pointillés) est constituée par une ligne, ce qui n'est pas souhaitable pour les raisons évoquées précédemment. Après le retrait par section du support 6, au moins un résidu de muret 6a sera inévitablement positionné sur le premier bord 28. La présence de ce résidu rendra plus difficiles les étapes d'ajustement et de polissage de l'aube, et pourra occasionner des défauts au niveau de ce bord et une irrégularité sur l'ensemble des aubes 2 fabriquées.

## Revendications

1. Procédé de fabrication par fusion sélective sur lit de poudre d'une préforme d'aube pour turbomachine comprenant une aube (2) et au moins un support amovible (6) fixé sur l'aube, l'aube étant fabriquée couche par couche à partir d'un premier bord (28) de l'aube correspondant à un bord d'attaque ou à un bord de fuite de l'aube jusqu'à un deuxième bord de l'aube correspondant à un bord de fuite ou à un bord d'attaque de l'aube selon une direction (26) perpendiculaire à une hauteur du premier bord, le procédé comprenant la fabrication du support amovible et de l'aube, ledit support amovible étant destiné à être fixé sur un plateau de fabrication (5) d'une part, et sur une portion d'une face (2a) formant intrados ou extrados de l'aube située au voisinage du premier bord de l'aube en regard dudit plateau de fabrication d'autre part, le premier bord (28) étant situé en regard du plateau de fabrication (5) et le deuxième bord étant situé à l'opposé du plateau de fabrication (5),
**caractérisé en ce que** la face (2a) formant intrados ou extrados de l'aube en regard du plateau de fabrication comporte un méplat (30) s'étendant à partir de ladite face, le méplat étant présent sur une portion de ladite face située en dehors du premier bord (28) de l'aube, le support amovible (6) étant fixé sur le méplat ou à la fois sur le méplat (30) et sur une portion de ladite face (2a) située en dehors du premier bord (28).

2. Procédé selon la revendication 1, **caractérisé en ce que** le méplat (30) comprend une première face (30a) parallèle au plateau de fabrication et tangente au premier bord (28) de l'aube.

3. Procédé selon la revendication 2, **caractérisé en ce que** le méplat (30) comprend en outre une deuxième face (30b) perpendiculaire à la première face (30a).

4. Procédé selon la revendication 3, **caractérisé en ce qu'**un point (30c) du méplat à l'intersection des première (30a) et deuxième (30b) faces dudit méplat se situe à une distance (d) de la face de l'aube (2a) en regard du plateau de fabrication (5) inférieure ou égale à 0,5 mm.

5. Procédé selon l'une quelconque des revendications 1 à 4, **caractérisé en ce que** le support amovible (6) est un support alvéolaire.

6. Procédé de fabrication d'une aube (2) pour turbomachine, **caractérisé en ce qu'**il comprend les étapes suivantes :
- la fabrication d'une préforme d'aube (étape E1) par un procédé selon l'une quelconque des revendications 1 à 5, et
- le retrait (étape E2) du support amovible (6) et du méplat (30) de la préforme d'aube.

7. Procédé selon la revendication 6, **caractérisé en ce que** le retrait du support amovible (6) et du méplat (30) comprend le polissage de l'aube (2).

8. Procédé de fabrication d'un secteur de distributeur (1) de turbomachine par fusion sélective sur lit de poudre, le secteur de distributeur comprenant une pluralité d'aubes (2) fixes portées par deux secteurs d'anneau (3, 4), **caractérisé en ce que** les aubes fixes sont fabriquées par un procédé de fabrication d'une aube selon l'une quelconque des revendications 6 et 7.

9. Préforme d'aube de turbomachine comprenant une aube (2) et au moins un support amovible (6) fixé sur l'aube, **caractérisée en ce qu'**une des faces de l'aube (2a) formant intrados ou extrados comprend un méplat (30) s'étendant à partir de ladite face, le méplat étant présent sur une portion de ladite face située en dehors d'un premier bord (28) de l'aube correspondant à un bord d'attaque ou à un bord de fuite de l'aube, le support amovible (6) étant fixé sur le méplat (30) ou à la fois sur le méplat et sur une portion de ladite face (2a) située en dehors du premier bord (28).

10. Préforme selon la revendication 9, **caractérisée en ce que** le méplat (30) comprend une première face (30a) tangente au premier bord (28) de l'aube (2) et une deuxième face (30b) sensiblement perpendiculaire à la première face (30a).

## Patentansprüche

1. Verfahren zur Herstellung einer Schaufelvorform für eine Turbomaschine durch selektive Pulverbettfusion, umfassend eine Schaufel (2) und mindestens einen an der Schaufel befestigten lösbaren Träger (6), wobei die Schaufel Schicht für Schicht ab einer ersten Kante (28) der Schaufel hergestellt wird, die einer Vorderkante oder einer Hinterkante der Schaufel entspricht, bis zu einer zweiten Kante der Schaufel, die einer Hinterkante oder einer Vorderkante der Schaufel entspricht, gemäß einer Richtung (26), die senkrecht zu einer Höhe der ersten Kante ist, wobei das Verfahren die Herstellung des lösbaren Trägers und der Schaufel umfasst, wobei der lösbare Träger zur Befestigung an einer Herstellungsplatte (5) zum einen und an einem Abschnitt einer Fläche (2a) bestimmt ist, die die Unterseite oder die Oberseite der Schaufel bildet, die sich in der Nähe der ersten Kante der Schaufel der Herstellungsplatte zum anderen zugewandt befindet, wobei sich die erste Kante (28) der Herstellungsplatte (5) zugewandt befindet und sich die zweite Kante gegenüber der Herstellungsplatte (5) befindet,
**dadurch gekennzeichnet, dass** die Fläche (2a), die die Unterseite oder Oberseite der Schaufel der Herstellungsplatte zugewandt bildet, eine Abflachung (30) aufweist, die sich ab der Fläche erstreckt, wobei die Abflachung auf einem Abschnitt der Fläche außerhalb der ersten Kante (28) der Schaufel vorhanden ist, wobei der lösbare Träger (6) auf der Abflachung oder gleichzeitig auf der Abflachung (30) und auf einem Abschnitt der Fläche (2a) befestigt ist, der sich außerhalb der ersten Kante (28) befindet.

2. Verfahren nach Anspruch 1, **dadurch gekennzeichnet, dass** die Abflachung (30) eine erste Fläche (30a) parallel zur Herstellungsplatte und anliegend an der ersten Kante (28) der Schaufel umfasst.

3. Verfahren nach Anspruch 2, **dadurch gekennzeichnet, dass** die Abflachung (30) ferner eine zweite Fläche (30b) senkrecht zur ersten Fläche (30a) umfasst.

4. Verfahren nach Anspruch 3, **dadurch gekennzeichnet, dass** sich ein Punkt (30c) der Abflachung am Schnittpunkt der ersten (30a) und zweiten (30b) Fläche der Abflachung in einem Abstand (d) von der der Schaufel (2a) der Herstellungsplatte (5) zugewandten Fläche von unter oder gleich 0,5 mm befindet.

5. Verfahren nach einem der Ansprüche 1 bis 4, **dadurch gekennzeichnet, dass** der lösbare Träger (6) ein alveolarer Träger ist.

6. Verfahren zur Herstellung einer Schaufel (2) für eine Turbomaschine, **dadurch gekennzeichnet, dass** es die folgenden Schritte umfasst:
- das Herstellen einer Schaufelvorform (Schritt E1) durch ein Verfahren nach einem der Ansprüche 1 bis 5, und
- das Entfernen (Schritt E2) des lösbaren Trägers (6) und der Abflachung (30) von der Schaufelvorform.

7. Verfahren nach Anspruch 6, **dadurch gekennzeichnet, dass** das Entfernen des lösbaren Trägers (6) und der Abflachung (30) das Polieren der Schaufel (2) umfasst.

8. Verfahren zur Herstellung eines Düsensegments (1) einer Turbomaschine durch selektive Pulverbettfusion, wobei das Düsensegment eine Vielzahl fester Schaufeln (2) umfasst, die von zwei Ringsektoren (3, 4) getragen werden, **dadurch gekennzeichnet, dass** die festen Schaufeln durch ein Verfahren zur Herstellung einer Schaufel nach einem der Ansprüche 6 und 7 hergestellt werden.

9. Turbomaschinen-Schaufelvorform, umfassend eine Schaufel (2) und mindestens einen auf der Schaufel befestigten lösbaren Träger (6), **dadurch gekennzeichnet, dass** eine der Flächen der Schaufel (2a), die die Unterseite oder Oberseite bildet, eine Abflachung (30) umfasst, die sich ab der Fläche erstreckt, wobei die Abflachung auf einem Abschnitt der Fläche vorhanden ist, der sich außerhalb einer ersten Kante (28) der Schaufel befindet, die einer Vorderkante oder einer Hinterkante der Schaufel entspricht, wobei der lösbare Träger (6) auf der Abflachung (30) oder gleichzeitig auf der Abflachung und auf einem Abschnitt der Fläche (2a) befestigt ist, der sich außerhalb der ersten Kante (28) befindet.

10. Vorform nach Anspruch 9, **dadurch gekennzeichnet, dass** die Abflachung (30) eine erste Fläche (30a) umfasst, die an der ersten Kante (28) der Schaufel (2) anliegt, und eine zweite Fläche (30b), die etwa senkrecht zur ersten Fläche (30a) ist.

## Claims

1. A method of fabricating an airfoil preform for a turbine engine by selective melting on a bed of powder, the preform comprising an airfoil (2) and at least one removable support (6) secured to the airfoil, the airfoil being fabricated layer by layer from a first edge (28) of the airfoil corresponding to a leading edge or to a trailing edge of an airfoil to a second edge of the airfoil corresponding to a trailing edge or a leading edge of the airfoil along a direction (26) perpendicular to a height of the first edge, the method comprising fabricating the removable support and the airfoil, said removable support being for securing firstly to a fabrication platform (5) and secondly to a portion of a face (2a) forming a pressure side or a suction side of the airfoil situated in the vicinity of the first edge of the airfoil and facing said fabrication platform, the first edge (28) being facing the fabrication platform (5) and the second edge being situated opposite from the fabrication platform;
the method being **characterized in that** the face (2a) forming a pressure side or a suction side of the airfoil and facing the fabrication platform includes a flat (30) extending away from said face, the flat being present over a portion of said face that is situated outside the first edge (28) of the airfoil, the removable support (6) being secured to the flat or both to the flat (30) and to the portion of said face (2a) that is situated outside the first edge (28).

2. A method according to claim 1, **characterized in that** the flat (30) comprises a first face (30a) parallel to the fabrication platform and tangential to the first edge (28) of the airfoil.

3. A method according to claim 2, **characterized in that** the flat (30) further comprises a second face (30b) perpendicular to the first face (30a).

4. A method according to claim 3, **characterized in that** a point (30c) of the flat at the intersection between the first and second faces (30a, 30b) of said flat is situated at a distance (d) from the face (2a) of the airfoil facing the fabrication platform (5) that is less than or equal to 0.5 mm.

5. A method according to any one of claims 1 to 4, **characterized in that** the removable support (6) is a cellular support.

6. A method of fabricating a turbine engine airfoil (2), **characterized in that** it comprises the following steps:
- fabricating an airfoil preform (step E1) by a method according to any one of claims 1 to 5; and
- removing (step E2) the removable support (6) and the flat (30) from the airfoil preform.

7. A method according to claim 6, **characterized in that** removing the removable support (6) and the flat (30) comprises polishing the airfoil (2).

8. A method of fabricating a turbine engine nozzle sector (1) by selective melting on a bed of powder, the nozzle sector comprising a plurality of stationary airfoils (2) carried by two ring sectors (3, 4), the method being **characterized in that** the stationary airfoils are fabricated by a method of fabricating an airfoil according to any either one of claims 6 and 7.

9. A turbine engine airfoil preform comprising an airfoil (2) and at least one removable support (6) secured to the airfoil, the preform being **characterized in that** one of the faces (2a) of the airfoil forming a pressure side or a suction side includes a flat (30) extending from said face, the flat being present over a portion of said face situated outside a first edge (28) of the airfoil corresponding to the leading edge or to the trailing edge of the airfoil, the removable support (6) being secured to the flat (30) or both to the flat and to a portion of said face (2a) situated outside the first edge (28).

10. A preform according to claim 9, **characterized in that** the flat (30) has a first face (30a) that is tangential to the first edge (28) of the airfoil (2) and a second face (30b) that is substantially perpendicular to the first face (30a).
